# EUROPEAN PATENT APPLICATION

(11) **EP 4 130 910 A1**
(43) Date of publication of application: **08.02.2023**
(21) Application number: 22184266.9
(22) Date of filing: 12.07.2022
(51) Int. Cl.: G05B 19/418, B23Q 7/14, B65G 54/02, G05B 19/19

(54) **A LINEAR MOTOR SYSTEM, CORRESPONDING FORMING ASSEMBLY AND METHOD**

(30) Priority: 05.08.2021 EP 21189789
(71) Applicant: Tetra Laval Holdings & Finance S.A., 1009 Pully (CH)
(72) Inventor: Caltabiano, Daniele, 41124 Modena (IT)
(74) Representative: Tetra Pak - Patent Attorneys SE

(57) **Abstract**

There is described a linear motor system, comprising:
- a track (1),
- a synchronization device (3) configured to transmit a synchronization signal (S),
- at least one movable member (2) coupled to the track (1) and configured to move along said track (1), the at least one movable member (2) comprising a synchronization sensor (20), configured to detect the synchronization signal (S), and a processing unit (22) coupled to the synchronization sensor (20) and configured for adjusting an internal clock as a function of said synchronization signal (S).

## Description

### Technical Field

The present invention relates to linear motor systems comprising one or more tracks and movable members coupled thereto. The linear motor system according to the instant invention may be used in industrial applications, e.g. in a forming assembly for forming a plurality of objects such as a packaging assembly configured to form and seal a plurality of packs containing pourable products, in particular pourable food products.

### Background Art

Linear motor systems are known and used in industrial applications to improve efficiency and automation. Linear motor systems comprise a plurality of movable members movable, independently from each other, on one or more tracks. For example, it is known the use of forming assemblies such as packaging assemblies comprising a plurality of carts movable independently from each other on tracks and configured to form and seal packages made of sterilized packaging material configured to receive pourable food products, such as fruit juice, UHT (ultra-high temperature-treated) milk, wine, tomato sauce, etc.

These packages are normally produced in fully automatic packaging assemblies, in which a continuous tube is formed from a web of packaging material fed to such packaging assembly. To obtain the final package, the web is folded and sealed longitudinally to form the tube, which is fed along a vertical advancing direction. The tube is then filled with the sterilized food product from above and is sealed and subsequently cut along equally spaced transversal cross sections.

Although being functionally valid, the known linear motor systems are still open to further improvement.

Currently, monitoring a correct handling of the packages may be done by checking the final shape of the package by the operator or by positioning a position error sensor connected to a system control and/or processing unit which is configured to check - at each handling cycle - whether the carts are positioned at the correct position at the correct time. However, the need is felt for a more automatic method of checking errors in the handling and/or to have direct measurements of the handling, i.e. forming and sealing, process while it is performed.

A need is felt for a synchronization of the movable members which may improve the correct operation of the linear motor system and the forming system comprising the linear motor system. For example, in use in a packaging assembly, a synchronization of the data received from sensors mounted on the movable members may facilitate detection of incipient failures or deviations from nominal behavior. If the movable members in the system are not synchronized, the measures detected by the sensors placed on the movable members may be imprecise.

### Summary of the invention

It is therefore an object of the present invention to provide a linear motor system, which can facilitate achieving one or more of the above-mentioned needs in a straightforward and low-cost manner. Such an object is achieved by means of a linear motor system and a corresponding method having the features set forth in the claims that follow.

Such an object may be achieved by means of a forming assembly for forming one or more objects, e.g. a packaging assembly for forming and sealing a plurality of packs, the forming assembly comprising a linear motor system according to one or more embodiments.

Thanks to the invention, the processing unit of a movable member is able to acquire data from one or more sensors and transmit it to a system control and/or processing unit, with the data being timestamped to a synchronized timestamp and not to an uncorrelated local microcontroller time. That is, thanks to the instant solution, it is possible to correlate the on-board data of the movable members (e.g. accelerations or forming profile in a packaging assembly) with the off-board data (data from a system control and/or processing unit).

The disclosed embodiments achieve one or more advantages, e.g. the timestamps of the different movable members in the system may be synchronized and/or the measurements of sensors mounted on the movable members can be similarly synchronized.

### Brief description of the drawings

Embodiments of the present invention will be described by way of example with reference to the accompanying drawings, in which:
- figure 1 is a schematic illustration of a linear motor system according to one or more embodiments,
- figures 2 and 3 is a schematic illustration of details of a linear motor system according to one or more embodiments,
- figure 4 illustrates an example of a synchronization between a movable member and a synchronization device according to one or more embodiments,
- figure 5 illustrates non-limiting examples of signals exchanged in the linear motor system,
- figure 6 illustrates an example of a synchronization between a movable member and a synchronization device according to one or more embodiments, and
- figure 7 is a schematic front view, with parts removed for clarity, of a packaging assembly for forming a plurality of sealed packs according to the present invention.

### Description of the invention

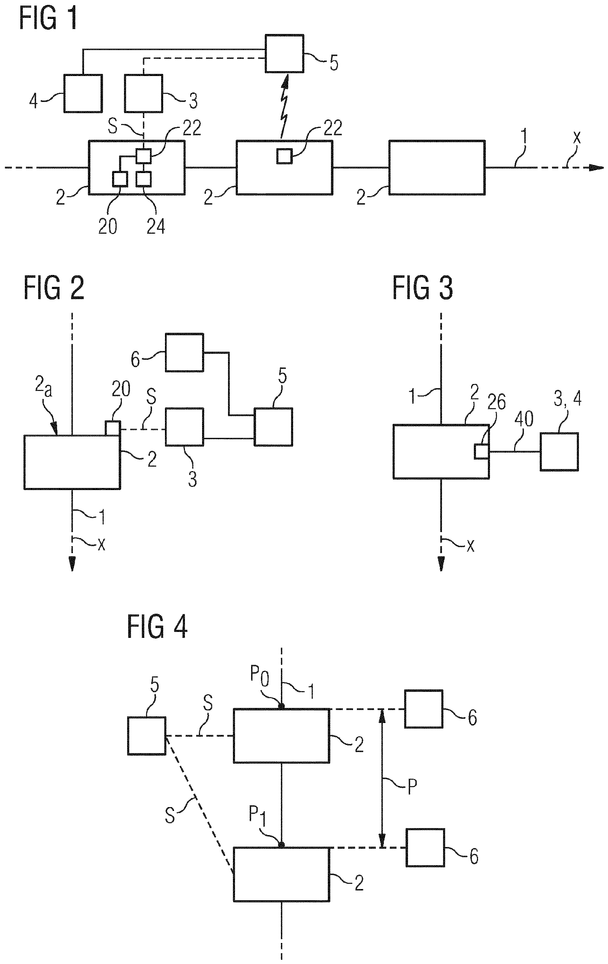

Figure 1 illustrates an example of a linear motor system according to one or more embodiments. Permanent magnets arrangements and coils - i.e. movable members and a respective track - define a linear motor, which, in a known manner, is configured to independently control the movement of the movable members along the respective track. The track may comprise a single rail or a pair of rails.

The linear motor system comprises:
- one or more tracks 1, e.g. a single track for simplicity in fig. 1,
- a synchronization device 3 configured to transmit a synchronization signal S, e.g. wirelessly,
- one or more movable members 2, preferably carts, coupled to the track 1 and configured to move along the respective track 1, in fig. 1 in a direction X exemplified by the arrow, the movable members 2 comprising a synchronization sensor 20, configured to detect the synchronization signal S, and a processing unit 22 coupled to the synchronization sensor 20 and configured for adjusting an internal clock as a function of said synchronization signal S. The synchronization sensor 20 may receive the synchronization signal S wirelessly or in a cabled manner.

For example, the track 1 defines an endless path on which the movable members 2 are configured to move cyclically.

The processing unit 22 of each movable member 2 comprises an internal clock that can be adjusted by means of the synchronization signal S, e.g. received at a predetermined synchronization position of the track 1. The calculations of the processing unit 22 and/or operations of the movable member 2, following the adjustment of the internal clock, may be extremely precise position-wise. This way, any data exchanged between the movable members 2 and/or with a system control and/or processing unit may be synchronized.

In one or more embodiments, one or more movable members 2 may each comprise one or more sensors 24 configured for detecting a physical quantity of the movable member 2 or part thereof. For example, the physical quantity may comprise a movement of the movable member 2 or part thereof that may be indicative of a position of the movable member 2 or parts thereof in the linear motor system. It will be appreciated that, even though herein reference is made to a movement sensor for simplicity, different sensors may be present, e.g. measuring different physical quantities that may be useful for improving a quality of operation of the movable members 2 of the linear motor system.

The processing unit 22 may be configured to:
- receive data from the one or more sensors 24, e.g. indicative of the movement(s) detected, and timestamps associated to said data, and
- adjust timestamps of said data as a function of the synchronization signal S.

In one or more embodiments, the processing unit 22 is configured to reset the internal clock at the reception of the synchronization signal S, e.g. when the synchronization signal S is received.

For example, the system may comprise a system control and/or processing unit 5, at the track 1, that may receive the data from the sensor(s) 24 mounted on the movable members 2, e.g. at each cycle. Advantageously, if the data timestamps are synchronized between the different movable members 2 and/or with the system control and/or processing unit 5, a precise control of the position and/or condition of the movable members 2 is possible. This way, errors in operation of the movable members in the system may be reduced. The transmission of data between the movable members 2 and the system control and/or processing units 5 may occur by means of lowenergy wireless transmission modules, e.g. Bluetooth lowenergy transmission modules.

The system control and/or processing unit 5 may be configured to receive the data from a movable member 2 and correct the timestamps thereof. If the internal clock of the movable member 2 processing unit 22 is reset at each cycle, the data timestamps begin at time 0 s. Accordingly, the system control and/or processing unit 5 may be configured to sum to the timestamps of the data a predetermined amount corresponding to the time at which the synchronization signal S is transmitted, preferably compensated of a reception delay. For example, the system control and/or processing unit 5 may send the synchronization signal S at 2 ms to a specific movable member 2. The data received from said movable member 2 has timestamps starting at 0 s. The transmission and reception delay of the synchronization signal S may be 10 µs. Thus, the system control and/or processing unit 5 may correct the timestamps of the data received adding to the timestamps 2 ms + 10 µs.

This way, all the data, gathered remotely from each movable member 2, is synchronized in time with the system control and/or processing unit 5.

The predetermined position may comprise a position immediately upstream of the movable member 2 operating region. That is, the internal clock of the movable member 2 may be adjusted or reset instants before the movable member 2 begins its designed automatized operation.

In one or more embodiments, the linear motor system comprises a powering device 4, positioned at the track 1 and couplable, e.g. electrically and/or magnetically, to the movable members 2 to provide power thereto. As depicted in fig. 1, the powering device 4 may temporarily couple, e.g. electrically and/or magnetically, to the movable members 2 at a predetermined powering region. For example, the powering region may be upstream of the synchronization position. The powering device 4 may comprise an electrical pulse generator or a transformer, that can be temporarily and electrically/magnetically coupled to the movable member 2. For example, the movable member 2 may be electrically and/or magnetically coupled to a stationary powering device 4 while transiting at the powering region.

In one or more embodiments, as illustrated in figure 2, the synchronization device 3 may comprise an optical signal transmitter configured to transmit an optical synchronization signal S, and the synchronization sensor 20 may comprise an optical sensor configured to detect the optical synchronization signal. The synchronization sensor 20 may positioned such that the synchronization signal S transmitted by the synchronization device 3 falls within the field of view of the synchronization sensor 20.

The optical sensor may be mounted on a surface 2a of the respective movable member 2. The synchronization device 3 may be positioned at the track 1. The optical signal transmitter may comprise an IR transmitter, e.g. an IR diode, configured to transmit an IR synchronization signal S, and the optical sensor may comprise an IR receiver, configured to detect the IR synchronization signal.

The optical sensor may be configured to detect an optical (IR) synchronization signal S having a predetermined carrier frequency bandwidth, preferably between 10 kHz and 1 MHz, more preferably 20 and 50 kHz, even more preferably 38 kHz. That is, the optical sensor may detect signals only in the predetermined bandwidth. Accordingly, the optical signal transmitter is configured to transmit the synchronization signal S in the predetermined carrier frequency bandwidth. Thanks to such feature, the optical sensor may be robust with respect to different signals with respect to the synchronization signal S and may thus avoid errors.

The system control and/or processing unit 5 may be coupled to and drive the synchronization device 3, which consists of the optical (IR) transmitter. For example, the system may comprise a first detection sensor 6, coupled e.g. directly to the system control and/or processing unit 5, that may detect when a movable member 2 is at the predetermined synchronization position of the track 1. The system control and/or processing unit 5 may be configured for transmitting the synchronization signal S by means of the optical transmitter when the presence of the at least one movable member 2 at the synchronization position is detected.

In alternative, the synchronization device 3 may comprise, in addition to the optical transmitter, a highspeed real-time communication module to receive an enable signal from the system control and/or processing unit 5, indicative of a movable member 2 being detected at the predetermined synchronization position p0. The synchronization device 3 may be configured to transmit the synchronization signal S when said enable signal is received by the synchronization device 3.

The processing unit 22 of the movable member 2 is thus configured to adjust, e.g. reset, its internal clock in the following instants, e.g. units of microseconds after reception of the optical synchronization signal S. The data received by the processing unit 22, following the reception of the synchronization signal S, are sampled and timestamped as a function thereof.

In one or more embodiments, as illustrated in figure 3, the synchronization device 3 may comprise, e.g. consist of, the powering device 4. The movable members 2 coupled to the track 1 comprise each a powering module 26 configured to receive power from the powering device 4 and redistribute it to the electronic components in the movable member 2. Accordingly, the synchronization sensor 20 is configured to detect the synchronization signal S as a result of the power transfer between the powering device 4 and the powering module 26. That is, the synchronization sensor may comprise a current sensor configured to detect the synchronization signal S as a function of an electrical current present at the powering module 26. For example, the powering device may comprise a transformer comprising a primary coil configured to induce a current in a secondary coil positioned at the powering module 26. Thus, the powering device 4 may be configured to electrically and magnetically couple to the powering module 26 of the movable member 2 when the movable member 2 transitions by the powering device 4.

In one or more embodiments, the powering device 4 may induce a sinusoidal current in the powering module 26. The synchronization sensor 20, e.g. comprising the current sensor, may be configured to detect a first rising edge of the sinusoidal current inducted. The synchronization signal S may be generated at the detection of said rising edge.

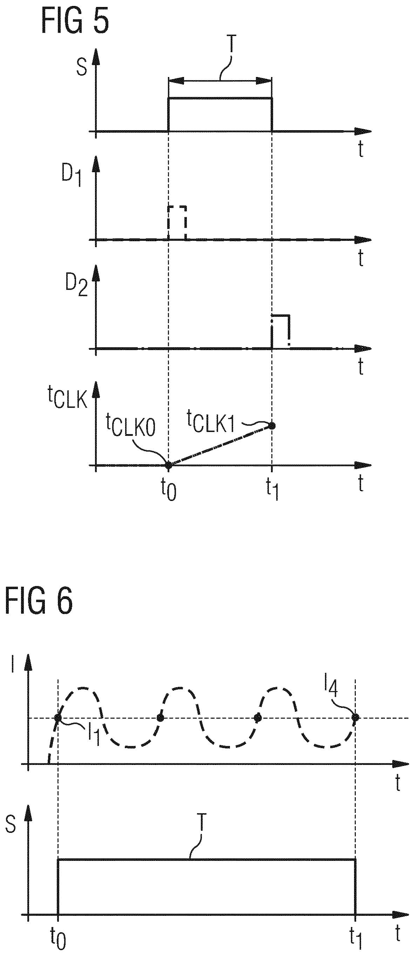

Figure 4 illustrates an example of operation of a synchronization between a movable member 2 and a synchronization device. Figure 5 illustrates non-limiting examples of signals exchanged in the linear motor system.

As discussed, in one or more embodiments the synchronization signal S is transmitted at a predetermined position p0 and at a predetermined time instant t0 in the cycle of the movable member 2. This way, advantageously, the movable member 2 may receive a precise information of a punctual point in space and time p0, t0 for synchronization of the movable members 2 within the linear motor system. The predetermined position p0 may be transmitted to the processing unit 22 or may be stored within a memory of the processing unit 22.

In addition or in alternative, the movable member 2 may be configured to receive the synchronization signal S, e.g. having a time length T. That is, while the movable member 2 moves along the track 1, the synchronization signal S may be transmitted to the movable member 2 for a predetermined period of time T.

The system may comprise the first detection sensor 6 configured to detect when the movable member 2 is at the first predetermined synchronization position p0 and transmit a first detection signal D1 to the system processing unit 5 as a result thereof. The system control and/or processing unit 5 may be configured to start transmission of the synchronization signal S at a first instant t0 of reception of the first detection signal D1.

The system may comprise a second detection sensor 6 configured to detect when the movable member 2 is at a second predetermined position p1 and transmit a second detection signal D2 to the system processing unit 5 as a result thereof. The system control and/or processing unit 5 may be configured to interrupt, e.g. end or stop, transmission of the synchronization signal S at a second instant t1 of reception of the second detection signal D1.

A distance P between the first and second predetermined position p0, p1 may be predetermined. Such distance P may be stored in a memory of the processing unit 22 of the movable member 2. In alternative, the distance P may be transmitted to the processing unit 22.

The processing unit 22, as a result of the synchronization signal S, may be configured to adjust the internal clock tCLK to a predetermined first time instant tCLK0, e.g. the processing unit 22 may reset the clock at first reception of the synchronization signal S, as illustrated in figure 5. The internal clock may start counting and, at time instant t1, when the synchronization signal S ends, a value of a second time instant tCLK1 of the internal clock may be stored.

The processing unit 22 may be configured to calculate an initial velocity v0 as v0 = P/(tCLK1 - tCLK0). Advantageously, this way also the initial velocity of the movable member 2 may be precisely calculated. A more correct measure of both velocity and position may as such be possible.

In one or more embodiments, in case the synchronization device 3 comprises, e.g. consists of, the powering device 4, the time length T of the synchronization signal S may be a result of the current I induced in the powering module 26, as illustrated in figure 6.

For example, the synchronization sensor 20 may be configured to detect the rising edges of the induced current I. The synchronization sensor 20 may be configured to start transmission of the synchronization signal S to the processing unit 22 at a first rising edge, e.g. the first rising edge I1 detected. The synchronization sensor 20 may be configured to interrupt transmission of the synchronization signal S to the processing unit 22 at a second rising edge, e.g. the fourth rising edge I4 detected.

Accordingly, the current sensor may be configured to detect the synchronization signal S as a function of a current present at the powering module 26, e.g. as a function of one or more rising edges I1, I4 of the current I at the powering module 26.

The time length T may be indicative of the distance P that the movable member 2 covers between time instants t0, t1. The distance P may be stored in a memory of the processing unit 22 of the movable member 2.

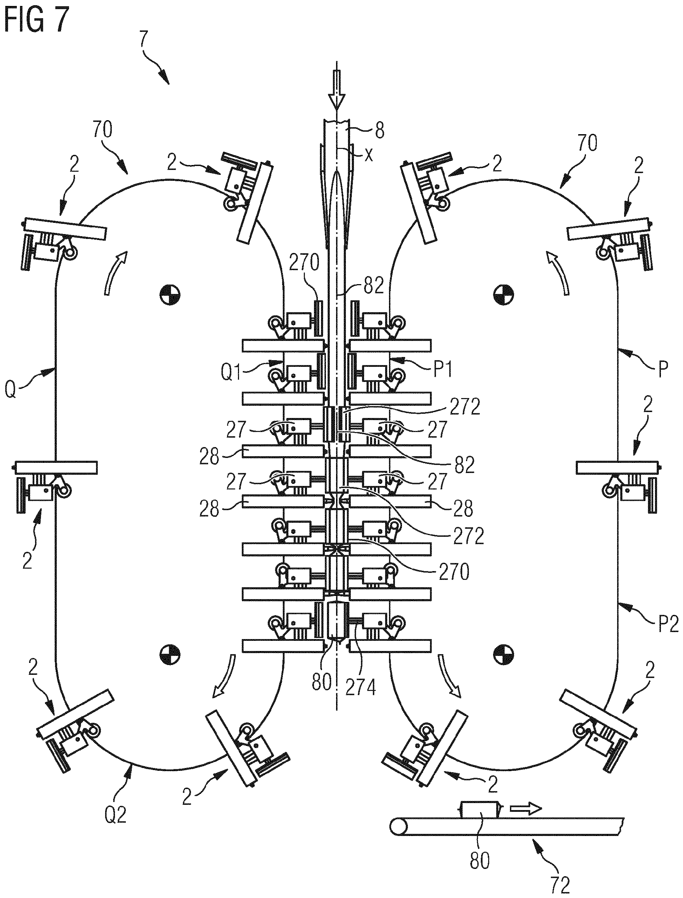

One or more embodiments, as illustrated in figure 7, refer to a forming assembly 7 configured to form one or more objects 80. In the following, a non-limiting example of a packaging assembly 7 is depicted, configured to form and seal a plurality of packs 80 containing a pourable product, preferably a pourable food product, starting from a tube 8 of packaging material. Whereas hereinafter reference is made to a packaging assembly 7, it will be appreciated that such is merely a non-limiting example for the ease of understanding and conciseness. Different types of forming assemblies 7 can exist that are not packaging assemblies. All features described in the following, even though related to a packaging assembly 7, can apply more in general to the forming assembly 7.

The packaging material has a multilayer structure (not shown), and comprises a layer of fibrous material, e.g. paper, covered on both sides with respective layers of heat-seal plastic material, e.g. polyethylene.

In the case of aseptic packs 80 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of the pack 80 eventually contacting the pourable product.

Tube 8 is formed in known manner by longitudinally folding and sealing a web (not shown) of packaging material. Tube 8 is then filled from above by a pipe (not shown) with the pourable product and is fed through packaging assembly 7 along a straight advancing direction X. In detail, tube 8 extends along a straight longitudinal, e.g. vertical, axis parallel to direction X.

The forming assembly 7, e.g. the packaging assembly 7, comprises a linear motor system according to one or more embodiments as described previously. Forming assembly 1 comprises:
- a pair of conveyors 70 arranged on respective lateral sides of tube 8, spaced apart with respect to one another, and configured to cooperate with tube 8; and
- an outlet conveyor 72, which is arranged below conveyors 70 staggered with respect to axis X.

Each conveyor 70 substantially comprises the endless track 1 and a plurality of movable members 2, preferably carts, coupled to, and cyclically movable along, one respective track 1. Each movable member 2 is configured to cyclically slide along track 1 of the respective conveyor 70. A plurality of movable members 2 slides, in use, along each track 1.

The forming assembly 7, e.g. the packaging assembly 7, thus comprises:
- a pair of endless tracks 1 between which the tube 8 is fed along the (e.g. straight) advancement direction X;
- a synchronization device 3 configured to transmit a synchronization signal S,
- a pair of movable members 2, each one of which movably coupled to, and cyclically movable along, one respective track 1.

Each movable member 2 of the pair of movable members 2 comprises a respective forming member 27 and a respective sealing member 28 linearly movable towards the tube 8, transversally to the advancement direction X, to cyclically cooperate in contact with successive tube portions 82, to form and seal at least corresponding pack portions of respective packs 80, respectively.

At least one movable member 2 of the pair of movable members 2 in the assembly comprises a synchronization sensor 20, configured to detect the synchronization signal S, and a processing unit 22 coupled to the synchronization sensor 20 and configured for adjusting an internal clock thereof as a function of the synchronization signal S. For example, the processing unit 22 is configured to reset the internal clock at the reception of the synchronization signal S, e.g. when the synchronization signal S is received.

As illustrated in figure 4, the two tracks 1 define respective endless paths P, Q arranged on opposite sides of the tube 8. More specifically, paths P, Q comprise:
- respective operative branches P1, Q1, preferably rectilinear, between which tube 8 is fed and along which movable members 2 cooperate with tube 8; and
- respective return branches P2, Q2, along which movable members 2 are detached from tube 8.

According to this preferred embodiment shown, paths P, Q are substantially oval-shaped.

In use, when sliding along the respective operative branch P1, Q1, each movable member 2 cooperates with a corresponding movable member 2 - i.e. movable members 2 mutually cooperates two by two - defining in this way a pair of movable members 2 facing each other and cooperating with one another and with tube 8 while sliding along operative branches P1, Q1.

Each pair of movable members 2 is configured to cooperate with tube 8 to cyclically form and seal one respective pack 80 at a time, and cut the pack 80 to separate the pack 80 from tube 8, as shown in figure 4.

To this end, each movable member 2 comprises, at one of its sides, the forming member 27 and the sealing member 28 both configured to cooperate with tube 8 along the respective operative branches P1, Q1.

As better described below, forming members 27 are configured to respectively cooperate with tube portions 82 of tube 8 to form at least corresponding pack portions, more in particular corresponding packs 80.

For this purpose, each forming member 27 is carried by, preferably mounted on, the respective movable member 2 in a movable manner. The forming member 27 may preferably comprise a half-shell, presenting a C-shaped cross section and comprising a main wall 270 and a pair of lateral flaps 272. In the embodiment shown, flaps 272 are movably coupled to wall 270.

In detail, flaps 270 project from opposite lateral edges of wall 270 when movable members move along operative branches P1, Q1, and are hinged to such edges.

In use, the half-shell of each forming member 27 is configured to sequentially and cyclically cooperate in contact with tube portions 82 so as to form at least pack portions of respective packs 80.

In greater detail, each half-shell is linearly movable transversally, e.g. orthogonally, to direction X, towards tube 8, i.e. towards the tube portion 82 that half-shell has to form.

Each movable member 2 comprises a movable element 274 linearly movable transversally, e.g. orthogonally, to direction X, which carries a respective half shell.

Sealing members 28 are configured to cooperate with tube 8 to seal tube portions 82 at predetermined, equally spaced, successive cross sections crosswise to direction X. Furthermore, sealing members 28 are configured to cooperate with tube 8 to cut packs 80 at the cross sections, to separate packs 80 from one another.

On one side, each sealing member 28 is mounted downstream of the corresponding forming member 27 of the respective movable member 2 along the respective path P, Q and comprises a counter-sealing device and an extractable cutting element, for example a knife (not illustrated). On the other side, each sealing member 28 is mounted downstream of the corresponding forming member 27 of the respective movable member 2 along the respective path P, Q and comprises a sealing device and a seat, adapted to receive the knife of the corresponding sealing device configured to cooperate with such counter-sealing device. Sealing devices may comprise ultrasonic, induction or inductive heating sealing devices.

As shown in figure 4, when forming members 27 and sealing members 28 are advanced by the respective movable members 2 along the respective operative branch P1, Q1, the respective half-shells, sealing devices and counter-sealing devices move back and forth along a direction orthogonal to direction X between:
- a closed position, or operative position, in which half-shells, sealing devices and counter-sealing devices cooperate with respective tube portions 82 to form, seal and cut respective packs 80; and
- an open position, or idle position, in which half-shells, sealing devices and counter-sealing devices are detached from tube 8 or from the formed packs 80.

When half-shells are in the operative (closed) position, flaps 272 of each half-shell rotate about the respective hinges from a position in which they diverge from the respective wall 270, to a position in which they are substantially orthogonal to the wall 270, face flaps 272 of the other half-shell carried by the corresponding movable member 2 of the same pair and contact tube 8 to completely surround the respective tube portion 82 destined to form the respective pack 80.

In one or more embodiments, as discussed previously, one or more movable members 2 may comprise one or more sensors 24, e.g. position detectors, mounted thereon and configured for transmitting data indicative of movement of the movable member 2 or parts thereof. For example, the sensors 24 may be positioned at the forming member 27 and/or at the sealing member 28. For example, the sensors 24 may be positioned at the movable parts of the movable members 2, e.g. at the flaps 272, at the wall 270 and/or at the movable element 274 of the forming members 27 and/or at the sealing devices and counter-sealing devices of the sealing members 28. Sensor data timestamps of the sensors 24 may thus be adjusted as a function of the synchronization signal S.

For example, the sensors 24 may be configured to detect a movement of the movable member 2 and/or a movement of a first portion of the movable member 2 configured to perform a relative movement with respect to a second portion of the movable member 2.

In one or more embodiments, the sensors 24 may comprise:
- one or more inertial sensors, preferably one or more accelerometers and/or a gyroscope, and/or
- one or more magnets and a magnetometer positioned at two different portions of the movable members 2 configured to move relatively from each other.

In one or more embodiments, the synchronization device 3 (not illustrated in figure 4) may be positioned at the track 1, preferably the synchronization device 3 may be mounted on a frame of the forming (e.g. packaging) assembly 7.

The synchronization device 3 may be configured to transmit the synchronization signal S at the beginning of each sealing cycle of a pack 80 in the plurality of packs 80 or at the beginning of each forming and sealing cycle of a pack 80 in the plurality of packs 80.

In one or more embodiments, to provide power to the movable members 2, the forming (e.g. packaging) assembly may comprise a powering device 4, e.g. an electrical pulse generator, as described previously. The powering device 4 may be positioned at the track 1 and may be couplable, e.g. temporarily, to the one or more movable members 2 to provide power thereto. The movable members 2 may be configured to couple to the powering device 4 at a predetermined powering region.

One or more embodiments may relate to a method that may be implemented in a linear motor system as described above. The method comprises:
- providing a linear motor system according to one or more embodiments,
- transmitting a synchronization signal S from the synchronization device 3,
- detecting the synchronization signal S by means of the synchronization sensor 20,
- adjusting, e.g. resetting, an internal clock of the processing unit 22 of the movable member 2 as a function of said synchronization signal S.

The method may comprise adjusting the internal clock when the synchronization signal S is detected, i.e. the steps of detecting the signal S and adjusting the internal clock may occur almost simultaneously.

The method may comprise coupling, e.g. temporarily, the powering device 4 to the at least one movable member 2 and providing power to the movable member 2.

The method may comprise:
- transmitting an optical synchronization signal S by means of the synchronization device 3 comprising an optical signal transmitter, preferably an IR transmitter, and
- detecting the optical synchronization signal S by means of the synchronization sensor 20 comprising an optical sensor, preferably an IR receiver.

The optical synchronization signal S may exhibit a predetermined carrier frequency bandwidth, preferably between 20 and 50 kHz, more preferably 38 kHz.

The synchronization signal S may have a predetermined time length T and the method may comprise calculating an initial velocity v0 as a function of the time length T.

The method may comprise:
- detecting presence of the movable member 2 at a first predetermined synchronization position p0 by means of a first detection sensor 6, and
- transmitting the synchronization signal S, by means of the synchronization device 3, when the presence of the movable member 2 at the first synchronization position p0 is detected.

The method may comprise:
- detecting presence of the movable member 2 at a second predetermined synchronization position p1 by means of a second detection sensor 6, and
- interrupting, i.e. stop or end, transmission of the synchronization signal S, by means of the synchronization device 3, when the presence of the movable member 2 at the second synchronization position p0 is detected.

The method may comprise:
- transferring power between the powering device 3 and the movable member 2, e.g. through the powering module 26, and
- detecting the synchronization signal S as a result of the power transfer, and/or
- redistributing the power to the electronic components in the movable member 2.

For example, the step of detecting the synchronization signal S as a result of the power transfer may comprise detecting when a current is present at the powering module 26 of the movable member 2.

The method may comprise:
- detecting movement of the movable member 2 and/or movement of parts thereof by means of a sensor 24, e.g. detection of the position of certain elements moving relatively with respect to each other or detection of the condition of an element of the movable member 2,
- associating said movement detected with a respective timestamp, and
- adjusting the timestamps as a function of the synchronization signal S.

In one or more embodiments, the method may comprise:
- feeding a tube 8 between a pair of endless tracks 1 along a straight advancement direction X;
- transmitting a synchronization signal S,
- movably coupling one or more movable members 2 to the tracks 1,
- cyclically moving the movable members 2 along the respective track 1;
- detecting the synchronization signal S,
- adjusting an internal clock of the processing unit of each movable member 2 as a function of the synchronization signal S,
- linearly moving a forming member 27 and a sealing member 28 of each movable member towards the tube 8, transversally to the advancement direction X,
- forming at least corresponding pack portions of respective packs 80,
- sealing at least corresponding pack portions of respective packs 80.

The steps of transmitting and detecting the synchronization signal S may occur previously with respect to the steps of linearly moving the forming member 27 and the sealing member 28 and forming and sealing. That is, the synchronization signal S may be configured to be transmitted and detected at the beginning of each sealing cycle of a pack 80 in the plurality of packs 80 or at the beginning of each forming and sealing cycle of a pack 80 in the plurality of packs 80.

The steps of transmitting and detecting the synchronization signal S may occur simultaneously with respect to the step of sealing.

The method may comprise, e.g. at each cycle of a plurality of movable members 2 in the linear motor system or forming (e.g. packaging) assembly 7:
- transmitting a plurality of synchronization signals S, e.g. each synchronization signal S in the plurality of synchronization signals S received by a respective movable member 2 in the plurality of movable members 2,
- for each movable member 2, collecting the data from the sensors 24, indicative of movement of the movable member 2 and/or movement of parts thereof and respective adjusted timestamps, and
- for each movable member 2, transmitting the data to a system control and/or processing unit 5,
- synchronizing the data received from every movable member 2 in the system as a function of said plurality of synchronization signals S.

In one or more embodiments, the method may comprise:
- detecting an error in the operation of the movable members 2 of the linear motor system, e.g. a fault or malfunctions in one or more of the movable members 2,
- transmitting an error signal indicative of the detected error.

## Claims

1. A linear motor system, comprising:
- a track (1),
- a synchronization device (3) configured to transmit a synchronization signal (S),
- at least one movable member (2) coupled to the track (1) and configured to move along said track (1), the at least one movable member (2) comprising a synchronization sensor (20), configured to detect the synchronization signal (S), and a processing unit (22) coupled to the synchronization sensor (20) and configured for adjusting an internal clock as a function of said synchronization signal (S).

2. The linear motor system of claim 1, wherein the processing unit (22) is configured to reset the internal clock when the synchronization signal (S) is received.

3. The linear motor system of claim 1 or claim 2, wherein the synchronization device (3) comprises an optical signal transmitter, preferably an IR transmitter, configured to transmit an optical synchronization signal (S), and the synchronization sensor (20) comprises an optical sensor, preferably an IR receiver, configured to detect the optical synchronization signal (S).

4. The linear motor system of claim 3, wherein the optical sensor comprises a low energy receiver configured to detect an optical synchronization signal (S) having a predetermined carrier frequency bandwidth.

5. The linear motor system of any of the previous claims, wherein the synchronization signal (S) has a predetermined time length (T) and wherein the processing unit (22) is configured to calculate an initial velocity (v0) as a function of said time length (T).

6. The linear motor system of any of the previous claims, comprising a first detection sensor (6) configured to detect presence of the at least one movable member (2) at a first predetermined synchronization position (p0), wherein the synchronization device (3) is configured to transmit the synchronization signal (S) when the presence of the at least one movable member (2) at the first synchronization position (p0) is detected.

7. The linear motor system of claim 5 and 6, comprising a second detection sensor (6) configured to detect presence of the at least one movable member (2) at a second predetermined synchronization position (p1), wherein the synchronization device (3) is configured to interrupt transmission of the synchronization signal (S) when the presence of the at least one movable member (2) at the second synchronization position (p1) is detected.

8. The linear motor system of any of the previous claims, comprising a powering device (4), preferably a transformer, couplable to the at least one movable member (2) to provide power thereto.

9. The linear motor system of claim 8, wherein the synchronization device (3) comprises the powering device (4), wherein the at least one movable member (2) comprises a powering module (26) configured to receive power from the powering device (4) and wherein the synchronization sensor (20) is configured to detect the synchronization signal (S) as a result of the power transfer between the powering device (4) and the powering module (26).

10. The linear motor system of claim 9, wherein said synchronization sensor (20) comprises a current sensor, configured to detect the synchronization signal (S) as a function of a current present at the powering module (26) .

11. A forming assembly (7) configured to form a plurality of objects (80) and comprising a linear motor system according to any of the preceding claims, the packaging assembly (7) comprising:
- a pair of endless tracks (1);
- a synchronization device (3) configured to transmit a synchronization signal (S),
- a pair of movable members (2), each one of which movably coupled to, and cyclically movable along, one respective track (1);
each movable member (2) of said pair of movable members (2) comprising a respective forming member (27) cyclically movable and configured to form the objects (80),
wherein at least one movable member (2) of the pair of movable members (2) comprises a synchronization sensor (20), configured to detect the synchronization signal (S), and a processing unit (22) coupled to the synchronization sensor (20) and configured for adjusting an internal clock thereof of said synchronization signal (S) .

12. The forming assembly (7) of claim 11, comprising a packaging assembly configured to form and seal a plurality of packs (80) containing a pourable product starting from a tube (8) of packaging material, the packaging assembly comprising a pair of endless tracks (1) between which said tube (8) is fed along a straight advancement direction (X), and
wherein each movable member (2) of said pair of movable members (2) comprises a respective forming member (27) and a respective sealing member (28) linearly movable towards said tube (8), transversally to said advancement direction (X), to cyclically cooperate in contact with successive tube portions (82), so as to form and seal at least corresponding pack portions of respective packs (80), respectively.

13. The forming assembly (7) of claim 11 or 12, wherein the synchronization device (3) is configured to transmit the synchronization signal (S) at the beginning of each sealing cycle of a pack (80) in the plurality of packs (80) or at the beginning of each forming cycle of a pack (80) in the plurality of packs (80).

14. The forming assembly (7) of any of claims 11 to 13, wherein at least one movable member (2) of the pair comprises at least one sensor (24) mounted thereon, configured to transmit data indicative of movement of the movable member (2) and/or parts thereof, preferably of the forming member (27) and/or the sealing member (28), wherein sensor data timestamps are adjusted as a function of the synchronization signal (S).

15. A method, comprising:
- providing a linear motor system according to any of claims 1 to 10,
- transmitting a synchronization signal (S) from the synchronization device (3),
- detecting the synchronization signal (S) by means of the synchronization sensor (20),
- adjusting an internal clock of the processing unit (22) of the movable member (2) as a function of said synchronization signal (S).
